# EUROPEAN PATENT APPLICATION

(11) **EP 3 332 896 A1**
(43) Date of publication of application: **13.06.2018**
(21) Application number: 16885443.8
(22) Date of filing: 05.10.2016
(51) Int. Cl.: B22F 3/16, B22F 3/105, B33Y 30/00, B33Y 50/02

(54) **3D PRINTING DEVICE, CONTROL METHOD FOR 3D PRINTING DEVICE, AND CONTROL PROGRAM FOR 3D PRINTING DEVICE**

(71) Applicant: Technology Research Association For Future Additiv, Chuo-ku, Tokyo 103-0027 (JP)
(72) Inventor: FUJIMAKI, Shimpei, Numazu-shi, Shizuok a 4108510 (JP); FUNAKI, Takahiro, Numazu-shi, Shizuok a 4108510 (JP); SATO, Shoichi, Numazu-shi, Shizuok a 4108510 (JP); KATO, Takashi, Numazu-shi, Shizuok a 4108510 (JP)
(74) Representative: TBK
(86) International application number: PCT/JP2016/079693
(87) International publication number: WO 2018/066099

(57) **Abstract**

In three-dimensional laminating and shaping, a three-dimensional laminated and shaped object having a corner portion is accurately shaped. A three-dimensional laminating and shaping apparatus includes a material supplier that supplies a material of a three-dimensional laminated and shaped object onto a shaping table, a light beam irradiator that performs irradiation of a light beam, a controller that controls a scanning direction and scanning speed of the light beam, a shaping model acquirer that acquires a shaping model of the three-dimensional laminated and shaped object, a shaping route decider that decides shaping routes based on the acquired shaping model, an extractor that extracts, from the decided shaping routes, a start point and end point of the shaping routes and a relay point at which a direction of the shaping route changes, and an additional route decider that decides additional routes for at least one of the extracted start point, end point, and relay point. The controller controls the scanning direction and scanning speed of the light beam based on the shaping routes and the additional routes.

## Description

### TECHNICAL FIELD

The present invention relates to a three-dimensional laminating and shaping apparatus, a control method of the three-dimensional laminating and shaping apparatus, and a control program of the three-dimensional laminating and shaping apparatus.

### BACKGROUND ART

In the above technical field, patent literature 1 discloses a technique of switching, in laser cutting processing, based on the virtual angle of a corner portion of a processing route, between normal cutting processing and edge processing in which the moving speed and laser output of a processing nozzle are lower than those of the normal cutting processing. Patent literature 2 discloses a technique in which when processing a corner portion in laser cutting processing, cutting processing is performed by changing cutting conditions based on the angle of the corner portion and the like. Patent literature 3 discloses a technique of executing, in laser cutting processing, edge processing in accordance with the angle of a corner portion. Patent literature 4 discloses a technique of gradually changing a cutting speed in accordance with a work material and a plate thickness at the rising of a corner portion.

### CITATION LIST

### PATENT LITERATURE

Patent literature 1: Japanese Patent No. 5255137
Patent literature 2: Japanese Patent No. 3211902
Patent literature 3: Japanese Patent No. 3825123
Patent literature 4: Japanese Patent Laid-open No. 2-30388

### SUMMARY OF THE INVENTION

### TECHNICAL PROBLEM

In the techniques described in the above literatures, however, it is impossible to accurately shape a three-dimensional laminated and shaped object having a corner portion with a predetermined angle or more in three-dimensional laminating and shaping.

The present invention enables to provide a technique of solving the above-described problem.

### SOLUTION TO PROBLEM

One aspect of the present invention provides a three-dimensional laminating and shaping apparatus comprising:
a material supplier that supplies a material of a three-dimensional laminated and shaped object onto a shaping table;
a light beam irradiator that performs irradiation of a light beam;
a controller that controls a scanning direction and scanning speed of the light beam;
a shaping model acquirer that acquires a shaping model of the three-dimensional laminated and shaped object;
a shaping route decider that decides shaping routes based on the acquired shaping model;
an extractor that extracts, from the decided shaping routes, a start point and end point of the shaping routes and a relay point at which a direction of the shaping route changes; and
an additional route decider that decides additional routes for at least one of the extracted start point, end point, and relay point,
wherein the controller controls the scanning direction and scanning speed of the light beam based on the shaping routes and the additional routes.

Another aspect of the present invention provides a control method of a three-dimensional laminating and shaping apparatus, comprising:
supplying a material of a three-dimensional laminated and shaped object onto a shaping table;
performing irradiation of a light beam;
controlling a scanning direction and scanning speed of the light beam;
acquiring a shaping model of the three-dimensional laminated and shaped object;
deciding shaping routes based on the acquired shaping model;
extracting a start point and end point of the decided shaping routes and a relay point at which a direction of the shaping route changes; and
deciding additional routes for the extracted start point, end point, and relay point,
wherein in the controlling, the scanning direction and scanning speed of the light beam are controlled based on the shaping routes and the additional routes.

Still other aspect of the present invention provides a control program of a three-dimensional laminating and shaping apparatus for causing a computer to execute a method, comprising:
supplying a material of a three-dimensional laminated and shaped object onto a shaping table;
performing irradiation of a light beam;
controlling a scanning direction and scanning speed of the light beam;
acquiring a shaping model of the three-dimensional laminated and shaped object;
deciding shaping routes based on the acquired shaping model;
extracting a start point and end point of the decided shaping routes and a relay point at which a direction of the shaping route changes; and
deciding additional routes for the extracted start point, end point, and relay point,
wherein in the controlling, the scanning direction and scanning speed of the light beam are controlled based on the shaping routes and the additional routes.

### ADVANTAGEOUS EFFECTS OF INVENTION

According to the present invention, it is possible to accurately shape a three-dimensional laminated and shaped object having a corner portion in three-dimensional laminating and shaping.

### BRIEF DESCRIPTION OF DRAWINGS

Fig. 1 is a view showing arrangement of a three-dimensional laminating and shaping apparatus according to the first example embodiment of the present invention;
Fig. 2A is a view for explaining examples of additional routes by the three-dimensional laminating and shaping apparatus according to the first example embodiment of the present invention;
Fig. 2B is a view for explaining other examples of the additional routes by the three-dimensional laminating and shaping apparatus according to the first example embodiment of the present invention;
Fig. 2C is a view for explaining a heat input amount at a relay point by the three-dimensional laminating and shaping apparatus according to the first example embodiment of the present invention;
Fig. 2D is a view for explaining still other examples of the additional routes by the three-dimensional laminating and shaping apparatus according to the first example embodiment of the present invention;
Fig. 2E is a table for explaining the moving time of the additional routes in the three-dimensional laminating and shaping apparatus according to the first example embodiment of the present invention;
Fig. 2F is a view for explaining the length of the additional routes by the three-dimensional laminating and shaping apparatus according to the first example embodiment of the present invention;
Fig. 3 is a table showing an example of an additional route table included in the three-dimensional laminating and shaping apparatus according to the first example embodiment of the present invention;
Fig. 4 is a flowchart for explaining the processing procedure of the three-dimensional laminating and shaping apparatus according to the first example embodiment of the present invention;
Fig. 5A is a view showing examples of shaping routes by a three-dimensional laminating and shaping apparatus according to a technical premise of the three-dimensional laminating and shaping apparatus according to the first example embodiment of the present invention;
Fig. 5B is a view for explaining a heat input amount at a relay point in the three-dimensional laminating and shaping apparatus according to the technical premise of the three-dimensional laminating and shaping apparatus according to the first example embodiment of the present invention;
Fig. 5C is a view showing examples of shaping routes including the relay point by the three-dimensional laminating and shaping apparatus according to the technical premise of the three-dimensional laminating and shaping apparatus according to the first example embodiment of the present invention;
Fig. 5D is a view showing other examples of the shaping routes including the relay point by the three-dimensional laminating and shaping apparatus according to the technical premise of the three-dimensional laminating and shaping apparatus according to the first example embodiment of the present invention;
Fig. 6 is a view showing the arrangement of a three-dimensional laminating and shaping apparatus according to the second example embodiment of the present invention; and
Fig. 7 is a flowchart for explaining the processing procedure of the three-dimensional laminating and shaping apparatus according to the second example embodiment of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [Technical Premise]

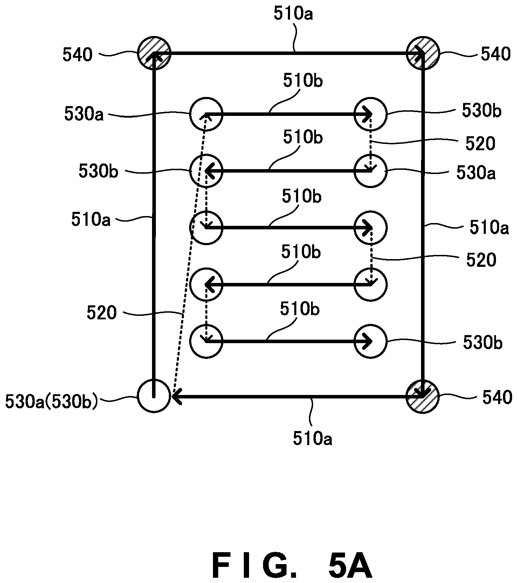

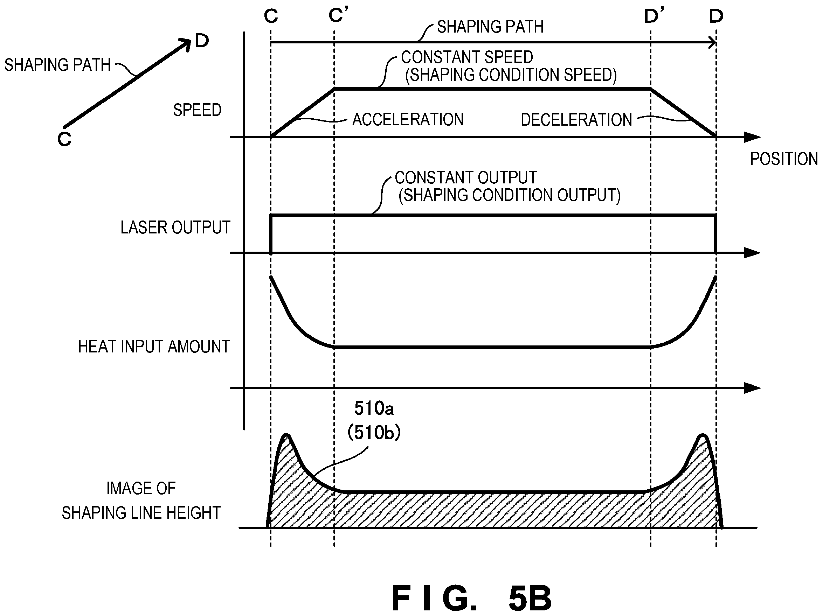

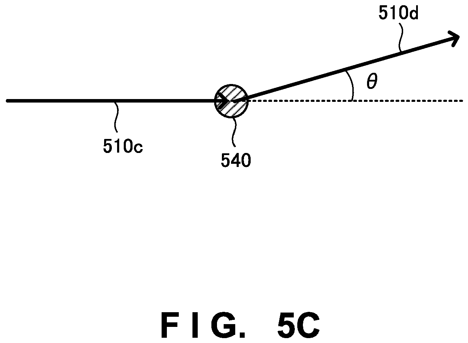

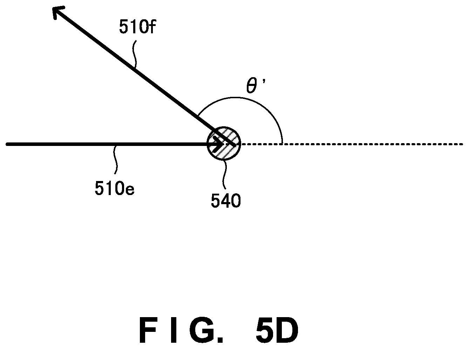

Shaping routes by a three-dimensional laminating and shaping apparatus according to a technical premise of a three-dimensional laminating and shaping apparatus according to the first example embodiment of the present invention will be described with reference to Figs. 5A to 5D. Fig. 5A is a view showing examples of shaping routes by the three-dimensional laminating and shaping apparatus according to the technical premise of the three-dimensional laminating and shaping apparatus according to this example embodiment. Fig. 5B is a view for explaining a heat input amount at a relay point in the three-dimensional laminating and shaping apparatus according to the technical premise of the three-dimensional laminating and shaping apparatus according to this example embodiment. Fig. 5C is a view showing examples of shaping routes including the relay point by the three-dimensional laminating and shaping apparatus according to the technical premise of the three-dimensional laminating and shaping apparatus according to this example embodiment. Fig. 5D is a view showing other examples of the shaping routes including the relay point by the three-dimensional laminating and shaping apparatus according to the technical premise of the three-dimensional laminating and shaping apparatus according to this example embodiment.

As shown in Fig. 5A, consider shaping routes 510a forming an outer rectangle and shaping routes 510b of five horizontal lines inside the rectangle. The three-dimensional laminating and shaping apparatus performs shaping of the shaping routes 510a forming the outer rectangle by scanning a laser beam in the clockwise direction, and performs shaping of the shaping routes 510b of the five horizontal lines inside the rectangle by scanning the laser beam in the horizontal direction.

The three-dimensional laminating and shaping apparatus shapes, in the clockwise direction, routes which start from a lower left start point 530a and return to an end point 530b (the same point as the start point 530a). After that, a nozzle is moved along a moving route 520, thereby shaping the shaping route 510b of the uppermost horizontal line from left to right. The nozzle is then moved along a moving route 520 to the second uppermost horizontal line, thereby shaping the shaping route 510b of the second horizontal line from right to left. The three-dimensional laminating and shaping apparatus executes shaping of the five horizontal lines by repeating these operations.

The shaping routes 510a and 510b are routes for shaping a three-dimensional laminated and shaped object by performing irradiation of a laser beam from the nozzle of the three-dimensional laminating and shaping apparatus, and melting a powder as a material. The moving routes 520 are routes along which the nozzle of the three-dimensional laminating and shaping apparatus moves, in which no irradiation of the laser beam is performed and no shaping is performed. The start point 530a is a point at which shaping starts, and the end point 530b is a point at which shaping ends.

When scanning the shaping routes 510a and 510b by the laser beam, it takes time for the scanning speed of the laser beam (nozzle) to rise to a predetermined scanning speed at the start point 530a of scanning. Therefore, in this section, that is, during a period until the scanning speed of the nozzle reaches the predetermined one from a stop state, the nozzle moves on the shaping routes 510a and 510b at a speed lower than the predetermined scanning speed.

In the shaping routes 510a and 510b up to the end point 530b of scanning, the scanning speed of the nozzle decreases from a state in which the scanning speed reaches the predetermined scanning speed, thereby stopping the movement of the nozzle at the end point 530b. During a period from when the scanning speed of the nozzle starts to decrease until the nozzle stops, the nozzle moves on the shaping routes 510a and 510b at a speed lower than the predetermined scanning speed.

Therefore, while the nozzle moves at a speed lower than the predetermined scanning speed, a carrier gas containing a powder ejected from the distal end of the nozzle is irradiated with the laser beam for a long time, thereby applying higher heat. If excessive heat is applied, an excessive heat input state occurs, thereby forming a portion swelled outward from an assumed shaping line or a portion recessed inward from the assumed shaping line near the start point 530a and the end point 530b.

At a relay point 540 as a corner portion having a predetermined angle or more, the scanning speed of the nozzle is decreased to change the scanning direction of the laser beam (the moving direction of the nozzle). Alternatively, the movement of the nozzle is temporarily stopped at the relay point 540 to change the moving direction of the nozzle, and then the nozzle is accelerated again to reach the predetermined scanning speed. That is, the relay point 540 is a point at which the moving direction of the laser beam (nozzle) is changed. Since this movement of the nozzle needs to be performed at the relay point 540, an excessive heat input state occurs, similarly to the start point 530a and the end point 530b, thereby causing a status in which the shaping line is swelled outward.

A case in which an excessive heat input state occurs will be described with reference to Fig. 5B. As shown in Fig. 5B, consider a shaping path (shaping route) from a point C to a point D. A section between the point C and a point C' is an acceleration section, and a section between a point D' and the point D is a deceleration section. The laser beam (nozzle) accelerates between the points C and C' to reach the predetermined speed (shaping condition speed) at the point C', moves at the constant speed between the points C' and D', starts to decelerate at the point D', and decelerates to, for example, a speed of zero at the point D.

On the other hand, while the laser beam (nozzle) moves between the points C and D, the output of the laser beam is maintained at a constant output. This indicates that irradiation of the laser beam of the same output is performed in the acceleration section between the points C and C' and the deceleration section between the points D' and D.

That is, in the sections between the points C and C' and between the points D' and D in which the laser beam moves at a speed lower than the predetermined speed, irradiation of the laser beam is performed for a time longer than that in the section between the points C' and D'. As a result, an irradiation energy density at which irradiation of the laser beam is performed is high in the acceleration section between the points C and C' and the deceleration section between the points D' and D. In the sections, heat higher than that in the constant-speed movement section between the points C' and D' is applied, thereby entering the excessive heat input state.

Therefore, as shown in Fig. 5B, an image of the shaping line height is formed into a shape swelled outward in the acceleration section between the points C and C' and the deceleration section between the points D' and D, thereby degrading the shaping accuracy.

The excessive heat input state occurs at the start point 530a, the end point 530b, and the relay points 540. As for the relay points 540, the excessive heat input state occurs at not all the relay points 540, and readily occurs when an angle of a change in direction is equal to or larger than the predetermined angle.

Figs. 5C and 5D show this state. Fig. 5C shows a case in which the excessive heat input state is difficult to occur at the relay point 540, and Fig. 5D shows a case in which the excessive heat input state readily occurs at the relay point 540.

As shown in Fig. 5C, consider a route from a shaping route 510c to a shaping route 510d via the relay point 540. In this case, an angle (θ) formed by the shaping routes 510c and 510d is relatively shallow, and the nozzle (laser beam) can pass through the relay point 540 while keeping the speed. That is, if the direction change angle from the shaping route 510c to the shaping route 510d is relatively gentle, the nozzle can trace the route from the shaping route 510c to the shaping route 510d without decreasing the speed. At this time, the nozzle is moved using an NC (Numerical Control) apparatus. As the function of the NC apparatus, if θ is smaller than a given angle, the NC apparatus can advance the nozzle at a constant speed without stopping the movement of the nozzle.

To the contrary, as shown in Fig. 5D, consider a route from a shaping route 510e to a shaping route 510f via the relay point 540. In this case, an angle (θ') formed by the shaping routes 510e and 510f is a large angle equal to or larger than 90°. When moving from the shaping route 510e to the shaping route 510f, the nozzle temporarily stops or decelerates at the relay point 540 to change the direction. Thus, in the stop process or deceleration process, heat is readily accumulated at the relay point 540. Note that the example in which the nozzle moves at the time of shaping has been explained. However, the nozzle may be fixed, and a shaping table may move.

### [First Example Embodiment]

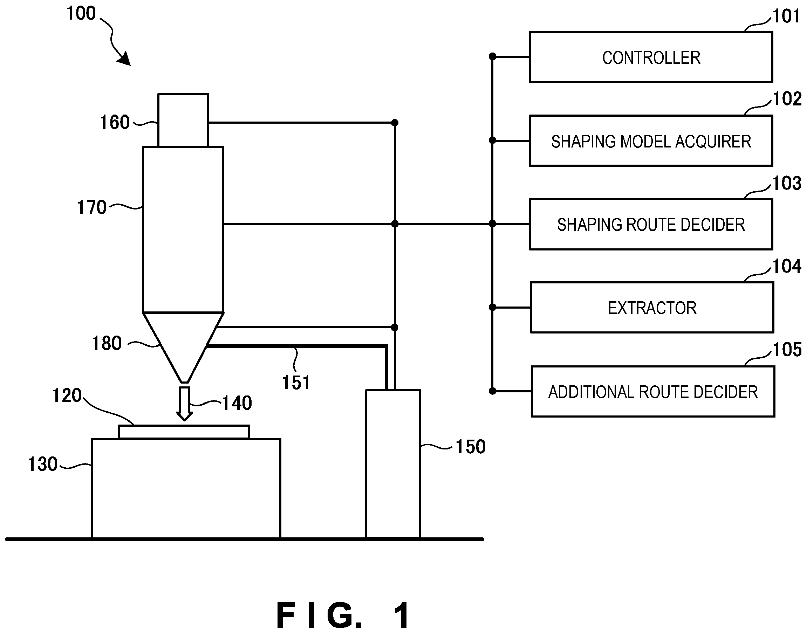

A three-dimensional laminating and shaping apparatus 100 according to the first example embodiment of the present invention will be described with reference to Figs. 1 to 4. Fig. 1 is a view for schematically explaining the arrangement of the three-dimensional laminating and shaping apparatus 100 according to this example embodiment. Note that in Fig. 1, to avoid the view from becoming complicated, components other than those shown in Fig. 1 are not illustrated, as needed. Note also that an LMD (Laser Metal Deposition) type three-dimensional laminating and shaping apparatus will be exemplified as the three-dimensional laminating and shaping apparatus 100 but a powder bed type three-dimensional laminating and shaping apparatus may be adopted.

The three-dimensional laminating and shaping apparatus 100 is an apparatus for shaping a three-dimensional laminated and shaped object 120 on a shaping table 130 by melting and solidifying a metal powder or the like as a material of a three-dimensional laminated and shaped object by irradiating the metal powder with a laser beam, and laminating the metal powder.

As shown in Fig. 1, the three-dimensional laminating and shaping apparatus 100 includes a controller 101, a shaping model acquirer 102, a shaping route decider 103, an extractor 104, and an additional route decider 105. The three-dimensional laminating and shaping apparatus 100 also includes the shaping table 130, a material storage 150, a material delivery tube 151, a light source 160, a lens barrel 170, and a nozzle 180. The material storage 150, material delivery tube 151, and nozzle 180 form a material supplier.

The light source 160 generates a light beam such as a laser beam. The lens barrel 170 adjusts the optical path of the generated laser beam to guide the laser beam to the shaping table 130, thereby performing irradiation. The nozzle 180 ejects a carrier gas 140 from the distal end of the nozzle 180 to supply the material of the three-dimensional laminated and shaped object 120 onto the shaping table 130. The carrier gas 140 is an inert gas such as argon gas, nitrogen gas, or helium gas, and is a gas for conveying the metal powder or the like as the material of the three-dimensional laminated and shaped object 120 onto the shaping table 130. The material storage 150 stores the material of the three-dimensional laminated and shaped object 120, and supplies the material to the nozzle 180 via the material delivery tube 151 by force feed or the like.

The controller 101 is connected to the light source 160, lens barrel 170, nozzle 180, and material storage 150. The controller 101 controls the light source 160 to adjust and control the output, scanning direction, scanning speed, and the like of the laser beam or the like. Similarly, the controller 101 controls the lens barrel 170 to adjust the optical axis, focusing state, and the like of the laser beam or the like. Furthermore, the controller 101 controls the nozzle 180 and material storage 150 to adjust the scanning speed of the nozzle 180, the ejection amount of the carrier gas 140 from the nozzle 180, and the like, thereby adjusting the supply amount of the material.

The shaping model acquirer 102 acquires a shaping model (three-dimensional shape) as data necessary for shaping of the three-dimensional laminated and shaped object 120. The shaping model is created using, for example, a CAM (Computer Aided Manufacturing) or a CAD (Computer Aided Design). The present invention, however, is not limited to them.

The shaping route decider 103 decides shaping routes based on the acquired shaping model. The shaping routes are decided by, for example, converting the shaping model as the three-dimensional shape into slice data, and deriving, for each slice data obtained by conversion, shaping routes to fill the slice data.

The extractor 104 extracts the start and end points of the shaping routes from the decided shaping routes. The extractor 104 also extracts a relay point as a point at which the direction of the shaping route changes. The start, end, and relay points are extracted by, for example, assigning code numbers to the shaping routes decided by the shaping route decider 103. If, for example, two code numbers "G00" and "G01" are used, the start, end, and relay points can be extracted based on the difference between the two code numbers.

That is, if "G01" comes after "G00", the extractor 104 determines the start point. To the contrary, if "G00" comes after "G01", the extractor 104 determines the end point. The extractor 104 determines the relay point in a portion where the code numbers "G01" is connected. As described above, the extractor 104 can determine and extract the start, end, and relay points by the code numbers assigned to the shaping routes. A method of extracting the start, end, and relay points is not limited to this. For example, a method of adding, to shaping route data, identification data such as flags representing the start, end, and relay points or the like may be used.

The additional route decider 105 decides additional routes to be added to the extracted start, end, and relay points. The shape of the additional routes is not specifically limited. However, for example, the additional route decider 105 decides the shape of the additional routes so that the moving time or route length of the additional routes is shortest. Note that the additional routes may be added to at least one, some, or all of the extracted start, end, and relay points.

The controller 101 controls the light source 160, the nozzle 180, and the like so that the laser beam traces the shaping routes and additional routes. Note that the controller 101 switches between ON and OFF of the laser beam and, for example, performs no irradiation (stops irradiation of the light beam) by turning off the laser beam in the additional routes. Since irradiation of the laser beam is performed at the constant output, the laser beam may be turned on/off by, for example, providing a gate at an arbitrary position of the nozzle 180 and opening/closing the gate, or a method of controlling the output.

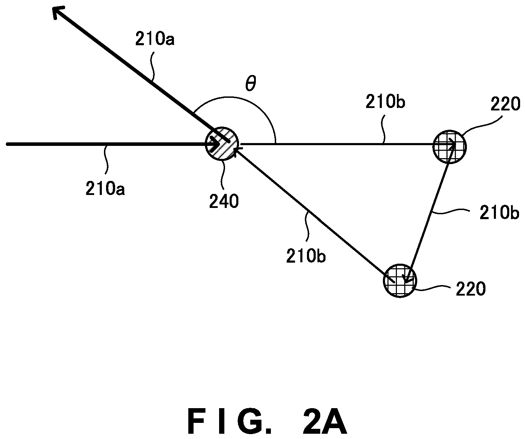

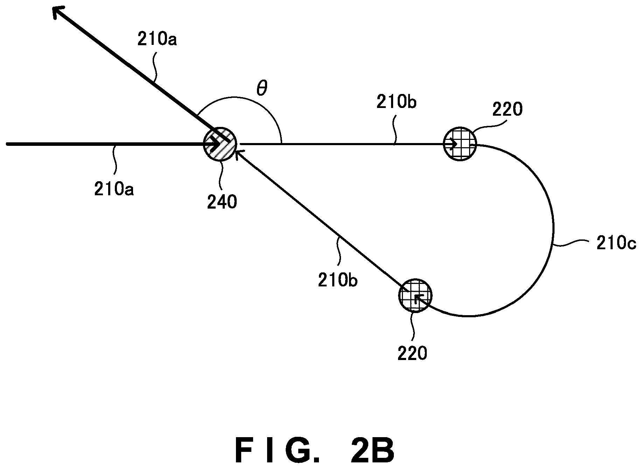

The additional routes will be described next with reference to Figs. 2A and 2B. Fig. 2A is a view for explaining examples of the additional routes by the three-dimensional laminating and shaping apparatus according to this example embodiment. Fig. 2B is a view for explaining other examples of the additional routes by the three-dimensional laminating and shaping apparatus according to this example embodiment.

As shown in Fig. 2A, shaping routes 210a are formed by the shaping route 210a from left to right and the shaping route 210a in the obliquely upper left direction after the shaping route 210a changes its direction at a relay point 240. For the shaping routes 210a, three linear additional routes 210b form a triangular shape. In the additional routes 210b, the laser beam (nozzle 180) changes its direction at two direction change points 220 as points at each of which the direction is changed, and faces in the same direction as that of the shaping route 210a in the obliquely upper left direction. The laser beam is accelerated in the additional route 210b in the obliquely upper left direction, and advances to the shaping route 210a again. Note that in the examples of the additional routes 210b shown in Fig. 2A, the laser beam needs to temporarily stop or decelerate at the two direction change points 220, similarly to the relay point 240. Note that the shape formed by all the additional routes 210a is not limited to the triangular shape shown in Fig. 2A, and may be a polygonal shape.

As shown in Fig. 2B, the additional routes 210b are formed by the linear additional routes 210b and a curved additional route 210c. That is, after passing through the linear additional route 210b, the laser beam enters the shaping route 210a in the obliquely upper left direction via the curved additional route 210c and the linear additional route 210b.

As described above, by sandwiching the curved additional route 210c between the linear additional routes 210b, the laser beam can pass through the additional routes 210b and 210c without decreasing the speed at the direction change points 220. Therefore, it is possible to shorten the passage time of the additional routes 210b and 210c, thereby shortening the shaping time. Note that the rotation radius (R) of the curved additional route 210c has a value which allows the laser beam to pass through the direction change points 220 without decreasing the scanning speed of the laser beam at the direction change points 220. That is, the rotation radius has a value which allows the laser beam to enter from the linear additional route 210b to the curved additional route 210c or from the curved additional route 210c to the linear additional route 210b. The value of the rotation radius is preferably smaller. A value which allows the laser beam to pass through the direction change points 220 without decreasing the speed is preferable. For example, about 3 mm is a standard for R. The present invention, however, is not limited to this.

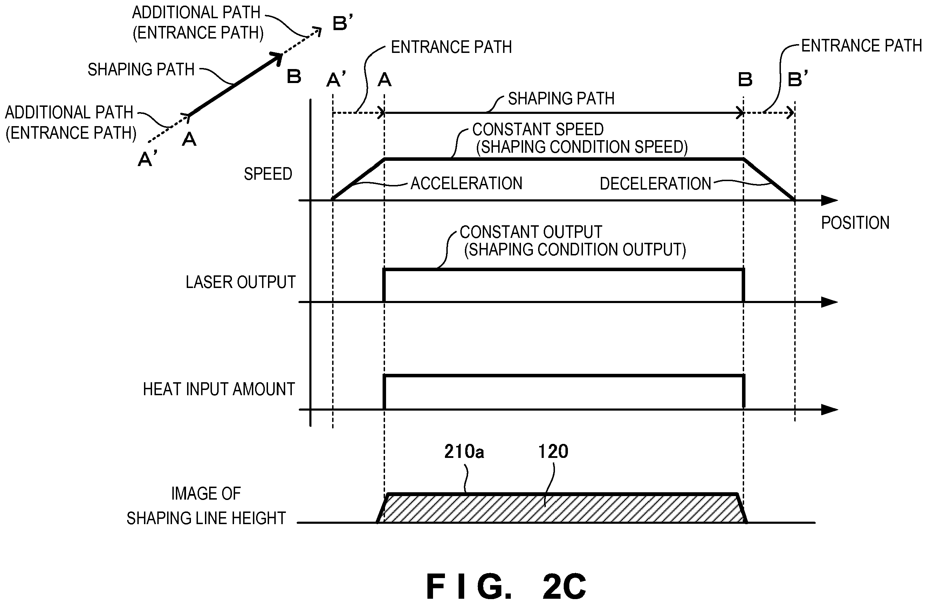

Fig. 2C is a view for explaining heat input amount at the relay point 240 by the three-dimensional laminating and shaping apparatus according to this example embodiment. As shown in Fig. 2C, consider a shaping route (shaping path) from a point A to a point B. A section (additional path) between a point A' and the point A corresponds to, for example, the additional routes 210b and 210c. In this section, the laser beam (nozzle) is accelerated to a predetermined speed. The section between the points A and B is a section in which the laser beam is scanned at the predetermined speed (constant speed or shaping condition speed). Since the laser beam enters the shaping path after being accelerated to the predetermined speed in the additional path (entrance path or acceleration path), predetermined heat can be applied from the start position of the shaping path. When the laser beam reaches the point B, that is, the end position of the shaping path, it is decelerated to a predetermined speed or until the laser beam stops between the points B and B' (entrance path or deceleration path).

In all the routes including the additional paths, the laser output of the laser beam is constant. Furthermore, in the shaping path, the moving speed (scanning speed) of the laser beam is constant at the predetermined speed. Thus, in the shaping path, the energy density of the laser beam to be emitted is constant. Therefore, in the shaping path, heat applied to the material such as a metal powder is constant. As shown in Fig. 2C, it is possible to control the occurrence of the excessive heat input state described in the technical premise by controlling scanning of the laser beam to move the laser beam at a constant speed, thereby suppressing degradation in shaping accuracy.

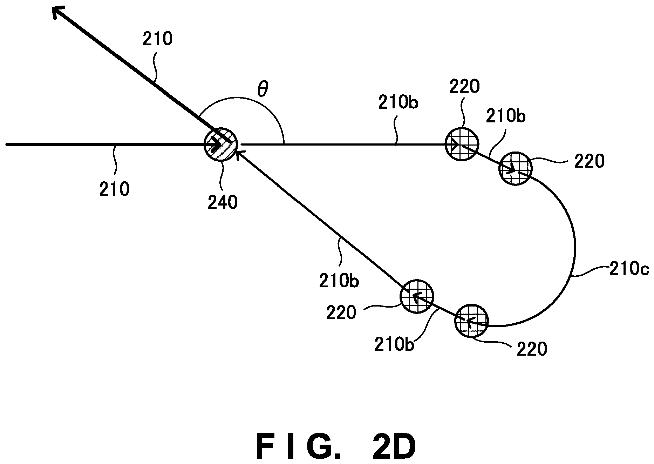

Fig. 2D is a view for explaining still other examples of the additional routes by the three-dimensional laminating and shaping apparatus according to this example embodiment. The additional routes shown in Fig. 2D are formed by adding linear routes 210b to the additional routes shown in Fig. 2B. That is, Fig. 2D shows an arrangement in which the linear additional routes 210b are sandwiched between the linear additional routes 210b and curved additional route 210c shown in Fig. 2B. The angled linear routes having relatively short distances may be sandwiched between the linear portions and the curved portion, and thus used as connections to the curved additional route 210c and linear additional route 210b. In this way, the rotation radius of the curved additional route 210c can be made small by sandwiching the angled linear portions between the linear portions and the curved portion. As shown in Fig. 2D, all the additional routes may be formed by freely combining the linear additional routes 210b and the curved additional route 210c. The additional routes may be formed by the curved additional route 210c. The present invention, however, is not limited to this.

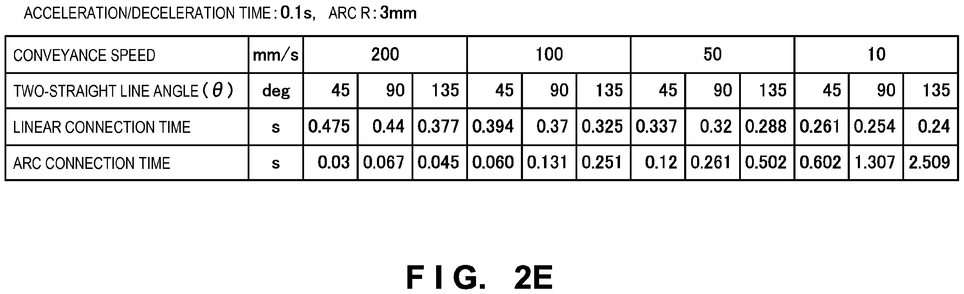

Fig. 2E is a table for explaining the moving time of the additional paths in the three-dimensional laminating and shaping apparatus according to this example embodiment. In Fig. 2E, if the additional routes 210b shown in Fig. 2A are linear, an acceleration/deceleration time indicates a time taken for acceleration or deceleration before and after the direction change point 220, and is 0.1 [s]. A conveyance speed is, for example, the moving speed of the laser beam in the shaping path. A two-straight line angle is θ shown in Figs. 2A and 2B. A linear connection time indicates the moving time in the case of the additional routes shown in Fig. 2A. An arc connection time indicates the moving time in the case of the additional routes shown in Fig. 2B, and R of the arc is 3 mm. If the conveyance seed is 200 [mm/s] or 100 [mm/s], the routes, shown in Fig. 2B, including the curved portion in the additional routes allows higher-speed movement. To the contrary, if the conveyance speed is 10 [mm/s], the additional routes formed by the straight lines shown in Fig. 2A allows higher-speed movement. In the case of a conveyance speed of 50 [mm/s], if the two-straight line angle is 45 [deg] or 90 [deg], the additional routes shown in Fig. 2B allows higher-speed movement, and if the two-straight line angle is 135 [deg], the additional routes shown in Fig. 2A allows higher-speed movement.

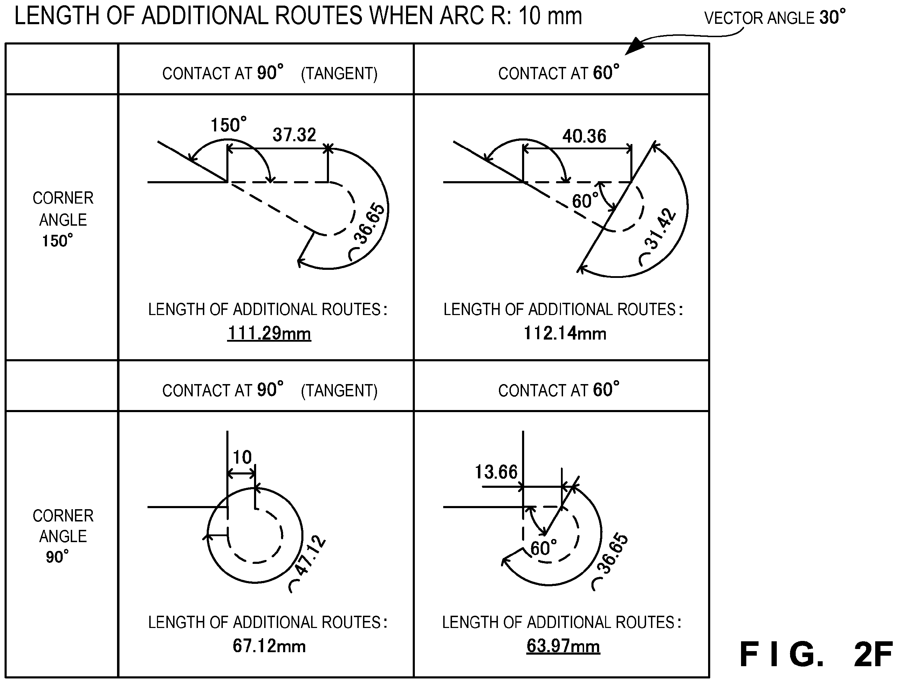

Fig. 2F is a view for explaining the length of the additional routes by the three-dimensional laminating and shaping apparatus according to this example embodiment. In Fig. 2F, the rotation radius of the curved route (arc) is 10 mm. As shown in Fig. 2F, if the corner angle is 150°, the total length of the additional routes in which the linear route and the curved route contact each other at 90° (tangent) is shorter than that of the additional routes in which the linear route and the curved route contact each other at 60°. As shown in Fig. 2F, if the routes contact each other at 90°, the length of the additional routes is 111.29 mm. On the other hand, if the routes contact each other at 60°, the length of the additional routes is 112.14 mm. By separating the additional routes into the linear portions and the curved portion, the length of the linear portion is shorter when the routes contact each other at 90°, and is longer when the routes contact each other at 60°. In addition, the curved portion is longer when the routes contact each other at 90°, and is shorter when the routes contact each other at 60°. However, when the routes contact each other at 90°, the total length of the additional routes is shorter.

If the corner angle is 90°, the total length of the additional routes in which the linear route and the curved route contact each other at 60° is shorter than that of the additional routes in which the linear route and the curved route contact each other at 90°. As shown in Fig. 2F, the length of the linear portion is shorter when the routes contact each other at 90°, and is longer when the routes contact each other at 60°. The curved portion is longer when the routes contact each other at 90°, and is shorter when the routes contact each other at 60°. However, when the routes contact each other at 60°, the total length of the additional paths is shorter.

A case in which the rotation radius is 10 mm has been described above. Even if the rotation radius is different, the shapes of the additional routes are similar. Thus, which of the routes in which the routes contact each other at 90° and the routes in which the routes contact each other at 60° have a shorter length is determined under the following conditions, that is, the corner angle of the two straight lines and a set angle (the vector angle of movement) at which continuous movement is performed without stopping.

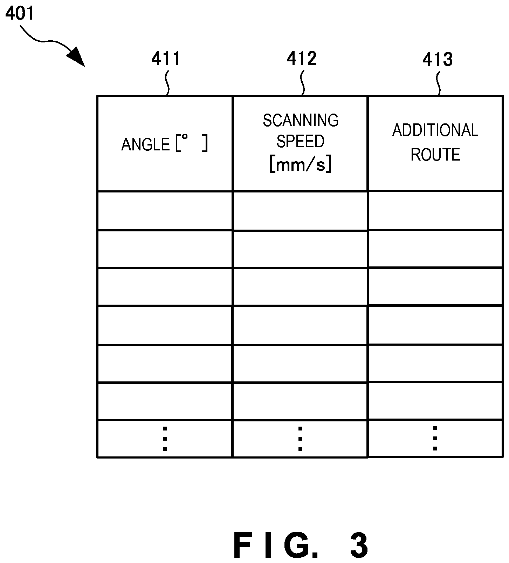

Fig. 3 is a table showing an example of an additional route table included in the three-dimensional laminating and shaping apparatus according to this example embodiment. An additional route table 401 stores an additional route 413 in association with an angle 411 ([°]) of the relay point 240 and a scanning speed 412 ([mm/s]) of the laser beam. With reference to the additional route table 401, the three-dimensional laminating and shaping apparatus 100 decides the additional routes 210b and 210c. Note that a method of deciding the additional routes 210b and 210c is not limited to the method of deciding the additional routes 210b and 210c with reference to the additional route table 401, and may be a method in which the three-dimensional laminating and shaping apparatus 100 decides the additional routes 210b and 210c based on the angle of the relay point 240 and the scanning speed of the laser beam every time.

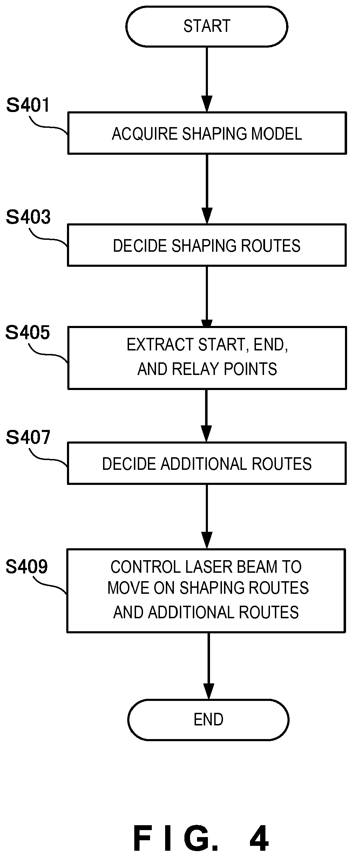

Fig. 4 is a flowchart for explaining the processing procedure of the three-dimensional laminating and shaping apparatus according to this example embodiment. In step S401, the three-dimensional laminating and shaping apparatus 100 acquires the shaping model of the three-dimensional laminated and shaped object 120 from a CAM or a CAD. In step S403, the three-dimensional laminating and shaping apparatus 100 decides shaping routes based on the acquired shaping model. In step S405, the three-dimensional laminating and shaping apparatus 100 extracts the start, end, and relay points from the decided shaping routes. In step S407, the three-dimensional laminating and shaping apparatus 100 decides additional routes for the extracted start, end, and relay points. In step S409, the three-dimensional laminating and shaping apparatus 100 shapes the three-dimensional laminated and shaped object 120 by controlling the laser beam to move on the shaping routes and additional routes.

According to this example embodiment, it is possible to accurately perform shaping at the start, end, and relay points in three-dimensional laminating and shaping, thereby accurately shaping a three-dimensional laminated and shaped object.

### [Second Example Embodiment]

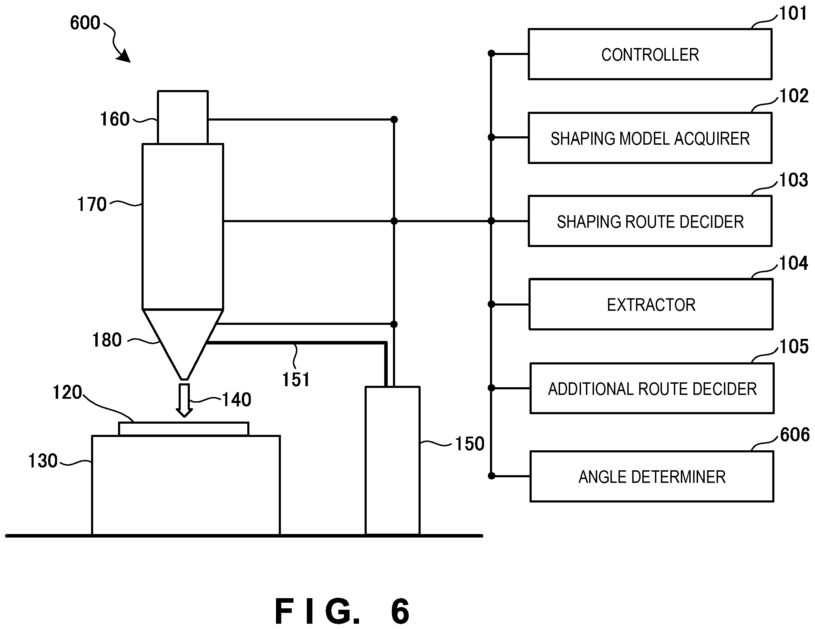

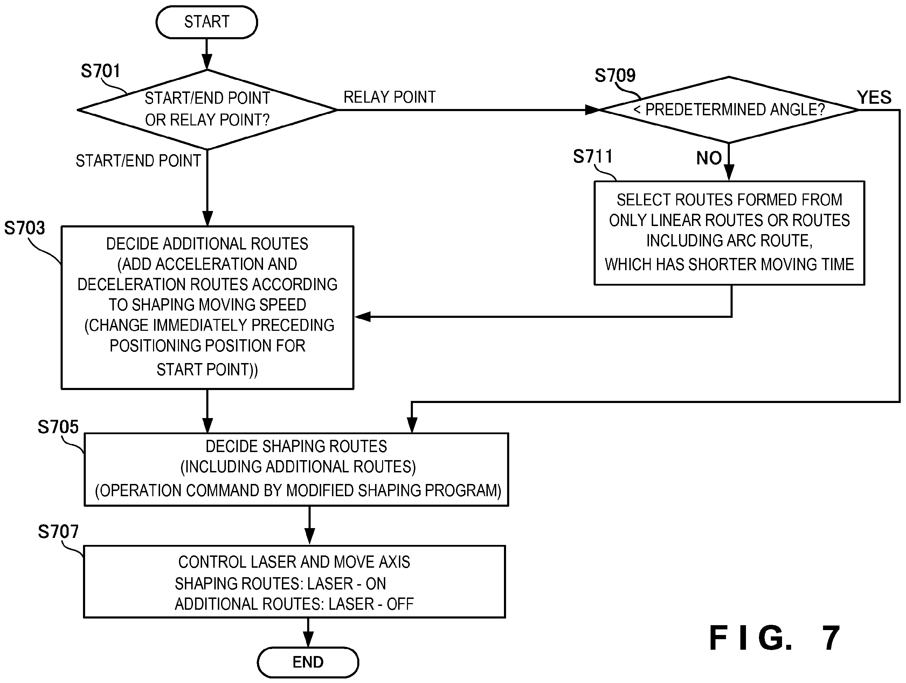

A three-dimensional laminating and shaping apparatus according to the second example embodiment of the present invention will be described with reference to Figs. 6 and 7. Fig. 6 is a view showing the arrangement of the three-dimensional laminating and shaping apparatus according to this example embodiment. The three-dimensional laminating and shaping apparatus according to this example embodiment is different from the first example embodiment in that an angle determiner is included. The remaining components and operations are the same as those in the first example embodiment. Hence, the same reference numerals denote the same components and operations, and a detailed description thereof will be omitted.

A three-dimensional laminating and shaping apparatus 600 further includes an angle determiner 606. The angle determiner 606 determines whether an angle at a relay point 240 is equal to or larger than a predetermined angle. The angle at the relay point 240 represents an angle of a change in direction at the relay point 240. If the angle determiner 606 determines that the angle is equal to or larger than the predetermined angle, an additional route decider 105 decides additional routes corresponding to the angle at the relay point 240.

If, for example, the angle at the relay point 240 is smaller than the predetermined angle, even if no additional routes are provided, the laser beam can pass through the relay point 240 without decreasing the scanning speed (moving speed). Therefore, if the angle of the change in direction at the relay point 240 is shallow, no additional routes are provided at the relay point 240. In this example embodiment, therefore, among the relay points 240, there is the relay point 240 at which no additional routes are provided. Note that the predetermined angle is set based on, for example, the performance of an NC apparatus. The present invention, however, is not limited to this. The user may set an arbitrary angle as the predetermined angle. Furthermore, additional routes are added to the start and end points.

Fig. 7 is a flowchart for explaining the processing procedure of the three-dimensional laminating and shaping apparatus according to this example embodiment. In step S701, the three-dimensional laminating and shaping apparatus 600 determines the start/end point or the relay point 240. If the start or end point is determined, the three-dimensional laminating and shaping apparatus 600 advances to step S703. In step S703, the three-dimensional laminating and shaping apparatus 600 decides additional routes. For example, acceleration and deceleration routes according to the shaping moving speed of the laser beam are added to the start or end point as additional routes. Note that in the case of the start point, an immediately preceding positioning position is also changed.

If the relay point 240 is determined in step S701, the three-dimensional laminating and shaping apparatus 600 advances to step S709. In step S709, the three-dimensional laminating and shaping apparatus 600 determines whether the angle at the relay point 240 is smaller than the predetermined angle. If it is determined that the angle is smaller than the predetermined angle (YES in step S709), the three-dimensional laminating and shaping apparatus 600 advances to step S705. If it is determined that the angle is not smaller than the predetermined angle, that is, if it is determined that the angle is equal to or larger than the predetermined angle (NO in step S709), the three-dimensional laminating and shaping apparatus 600 advances to step S711.

In step S711, the three-dimensional laminating and shaping apparatus 600 decides additional routes 210b and 210c added to the relay point 240. The additional routes 210b and 210c are decided by, for example, selecting additional routes formed from only the linear additional routes 210b or additional routes including the additional route 210c as an arc (curved) route, which has a shorter moving time (moving distance). The present invention, however, is not limited to this.

The three-dimensional laminating and shaping apparatus 600 advances to step S703, and decides the additional routes 210b and 210c necessary for shaping of a three-dimensional laminated and shaped object 120 based on the additional routes decided for the start/end point and the additional routes decided for the relay point 240.

In step S705, the three-dimensional laminating and shaping apparatus 600 decides shaping routes 210a including the additional routes 210b and 210c. Then, the three-dimensional laminating and shaping apparatus 600 generates, as a modified shaping program, a shaping program for the decided shaping routes 210a (including the additional routes 210b and 210c), and sends an operation command to each functional component of the three-dimensional laminating and shaping apparatus 600.

In step S707, the three-dimensional laminating and shaping apparatus 600 controls a nozzle 180 and the like based on the modified shaping program to shape the three-dimensional laminated and shaped object 120. A controller 101 of the three-dimensional laminating and shaping apparatus 600 turns on the laser beam in the shaping routes 210a, and turns off the laser beam in the additional routes 210b and 210c. Furthermore, the controller 101 moves the axis of the nozzle 180 or the like so that the laser beam traces the shaping routes 210a and the additional routes 210b and 210c.

According to this example embodiment, in three-dimensional laminating and shaping, it is possible to accurately shape a three-dimensional laminated and shaped object having a relay point with a predetermined angle or more. In addition, in three-dimensional laminating and shaping, it is possible to accurately shape a three-dimensional laminated and shaped object having a relay point with a predetermined angle or more at high speed.

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

## Claims

1. A three-dimensional laminating and shaping apparatus comprising:
a material supplier that supplies a material of a three-dimensional laminated and shaped object onto a shaping table;
a light beam irradiator that performs irradiation of a light beam;
a controller that controls a scanning direction and scanning speed of the light beam;
a shaping model acquirer that acquires a shaping model of the three-dimensional laminated and shaped object;
a shaping route decider that decides shaping routes based on the acquired shaping model;
an extractor that extracts, from the decided shaping routes, a start point and end point of the shaping routes and a relay point at which a direction of the shaping route changes; and
an additional route decider that decides additional routes for at least one of the extracted start point, end point, and relay point,
wherein said controller controls the scanning direction and scanning speed of the light beam based on the shaping routes and the additional routes.

2. The three-dimensional laminating and shaping apparatus according to claim 1, further comprising:
an angle determiner that determines whether an angle of the change in direction at the relay point is not smaller than a predetermined angle,
wherein if the angle is not smaller than the predetermined angle, said additional route decider decides additional routes corresponding to the angle.

3. The three-dimensional laminating and shaping apparatus according to claim 1 or 2, wherein the additional routes include at least one linear route.

4. The three-dimensional laminating and shaping apparatus according to any one of claims 1 to 3, wherein the additional routes include at least one curved route.

5. The three-dimensional laminating and shaping apparatus according to claim 4, wherein said additional route decider decides a radius of curvature of the curved route based on the angle of the change in direction at the relay point.

6. The three-dimensional laminating and shaping apparatus according to any one of claims 1 to 5, wherein said additional route decider decides the additional routes based on a scanning time of the additional routes by the light beam.

7. The three-dimensional laminating and shaping apparatus according to any one of claims 1 to 6, wherein said controller accelerates/decelerates scanning of the light beam in the additional routes.

8. The three-dimensional laminating and shaping apparatus according to any one of claims 1 to 6, wherein said controller scans the light beam at a constant speed in the shaping routes.

9. The three-dimensional laminating and shaping apparatus according to any one of claims 1 to 8, wherein said light beam irradiator stops the irradiation of the light beam in the additional routes.

10. The three-dimensional laminating and shaping apparatus according to any one of claims 1 to 9, wherein said additional route decider decides a route length of the additional routes in accordance with the scanning speed of the light beam.

11. A control method of a three-dimensional laminating and shaping apparatus, comprising:
supplying a material of a three-dimensional laminated and shaped object onto a shaping table;
performing irradiation of a light beam;
controlling a scanning direction and scanning speed of the light beam;
acquiring a shaping model of the three-dimensional laminated and shaped object;
deciding shaping routes based on the acquired shaping model;
extracting a start point and end point of the decided shaping routes and a relay point at which a direction of the shaping route changes; and
deciding additional routes for the extracted start point, end point, and relay point,
wherein in the controlling, the scanning direction and scanning speed of the light beam are controlled based on the shaping routes and the additional routes.

12. A control program of a three-dimensional laminating and shaping apparatus for causing a computer to execute a method, comprising:
supplying a material of a three-dimensional laminated and shaped object onto a shaping table;
performing irradiation of a light beam;
controlling a scanning direction and scanning speed of the light beam;
acquiring a shaping model of the three-dimensional laminated and shaped object;
deciding shaping routes based on the acquired shaping model;
extracting a start point and end point of the decided shaping routes and a relay point at which a direction of the shaping route changes; and
deciding additional routes for the extracted start point, end point, and relay point,
wherein in the controlling, the scanning direction and scanning speed of the light beam are controlled based on the shaping routes and the additional routes.
